# EUROPÄISCHE PATENTSCHRIFT

(11) **EP 1 897 753 B1**
(45) Veröffentlichungstag und Bekanntmachung des Hinweises auf die Patenterteilung: **14.11.2012**
(21) Anmeldenummer: 07016523.8
(22) Anmeldetag: 23.08.2007
(51) Int. Cl.: B60R 5/04, B60R 21/06, B60R 7/08

(54) **Befestigungsvorrichtung für ein Kassettengehäuse**
Mounting device for a cartridge casing
Dispositif de fixation pour un boîtier de cassette

(30) Priorität: 11.09.2006 DE 102006043308
(43) Veröffentlichungstag der Anmeldung: 12.03.2008
(73) Patentinhaber: BOS GmbH & Co. KG, 73760 Ostfildern (DE)
(72) Erfinder: Krause, Beate, 73635 Rudersberg-Michelau (DE); Mirkes, Oliver, 73760 Ostfildern (DE)
(74) Vertreter: Patentanwälte Ruff, Wilhelm, Beier, Dauster & Partner

(56) Entgegenhaltungen:
- EP-A- 0 685 358
- EP-A- 1 216 884
- DE-A1- 10 065 311
- DE-A1- 10 242 339
- DE-A1- 19 728 547
- DE-B3- 10 354 152
- DE-C1- 10 033 381
- DE-C1- 10 063 725
- DE-C1- 10 218 632

## Beschreibung

Die Erfindung betrifft eine Befestigungsvorrichtung für ein Kassettengehäuse an einer fahrzeugseitigen Begrenzungsfläche, insbesondere einer Rückenlehnenanordnung einer Fahrzeugsitzanordnung, mit wenigstens einer fahrzeugseitigen Befestigungsprofilierung, die formschlüssig mit einer auf die Befestigungsprofilierung abgestimmten Befestigungseinheit an dem Kassettengehäuse zusammenwirkt.

Eine derartige Befestigungsvorrichtung ist für ein Kassettengehäuse einer Laderaumabdeckung und/oder einem Trennnetz für einen Laderaum eines Kraftfahrzeugs allgemein bekannt. Das Kassettengehäuse ist formstabil als Hohlprofil ausgeführt, in dem wenigstens eine Wickelwelle für die Laderaumabdeckung und/oder das Trennnetz drehbar gelagert sind. Das Kassettengehäuse ist mit wenigstens einem Auszugschlitz versehen, durch den die Laderaumabdeckung und/oder das Trennnetz ausgezogen und in die Schutzposition überführt werden können. Das Kassettengehäuse ist formstabil ausgeführt und weist eine Befestigungseinheit auf, mittels der das Kassettengehäuse an einer Rückseite einer Rückenlehnenanordnung einer Fondsitzbank befestigbar ist. Bei dem bekannten Kassettengehäuse wird die Befestigungseinheit durch zwei am Kassettengehäuse zueinander beabstandete Schiebesteine gebildet, die in korrespondierende Befestigungsprofilierungen an der Rückseite der Rückenlehnenanordnung, nämlich in korrespondierende Schienenabschnitte bis in eine Endposition hinein einschiebbar sind. Eine derartige Befestigungsvorrichtung ist beispielsweise bei einem VW-Passat, Baujahr 2000, bekannt. Die Befestigungseinheit wird an entsprechenden Befestigungspunkten des Kassettengehäuses durch Verschrauben, Vernieten oder ähnlichem befestigt. Die Befestigungsprofilierungen sind an der Rückenlehnenanordnung der Fondsitzbank befestigt. Um das Kassettengehäuse an der Fondsitzbank festlegen zu können, wird es mit seiner Befestigungseinheit zu den Befestigungsprofilierungen ausgerichtet und anschließend in Fahrzeugquerrichtung bis zu einem Endanschlag verschoben, wodurch ein Formschluss und eine Verspannung des Kassettengehäuses an der Fondsitzbank erzielt werden.

Aus dem Dokument DE 102 42 339 A1 ist eine Gattungsbildende Befestigungsvorrichtung entsprechend dem Oberbegriff des Anspruchs 1 bekannt.

Aufgabe der Erfindung ist es, eine Befestigungsvorrichtung der eingangs genannten Art zu schaffen, die eine einfache Montage und Demontage des Kassettengehäuses auch bei Toleranzen zwischen Kassettengehäuse und fahrzeugseitiger Begrenzungsfläche oder zwischen der Befestigungseinheit und der Befestigungsprofilierung ermöglicht.

Diese Aufgabe wird dadurch gelöst, dass zwischen der Begrenzungsfläche und dem Kassettengehäuse in befestigtem Zustand des Kassettengehäuses ein begrenztes Relativspiel vorgesehen ist und dass der Befestigungseinheit eine elastisch nachgiebige Pufferung zugeordnet ist, die das Relativspiel dämpft. Die Befestigungseinheit kann ein oder mehrere Befestigungsteile enthalten. In analoger Weise kann auch die Befestigungsprofilierung ein oder mehrere Profilierungsteile aufweisen. Bei mehreren Profilierungsteilen und mehreren Befestigungsteilen sind diese vorzugsweise in Längsrichtung des Kassettengehäuses zueinander beabstandet. Das Kassettengehäuse ist vorzugsweise für die Aufnahme einer Laderaumabdeckung und/oder eines Trennnetzes vorgesehen. Es ist aber auch möglich, in dem Kassettengehäuse eine Sonnenschutzvorrichtung zu integrieren. Für diesen Fall ist die fahrzeugseitige Begrenzungsfläche dann nicht die Rückenlehne einer Fahrzeugsitzanordnung, sondern ein Seiten- oder Dachverkleidungsteil des Fahrzeuginnenraumes oder ein anderer Innenraumabschnitt, der zu einem entsprechenden Fenster- oder Dachausschnitt benachbart ist. Durch die erfindungsgemäße Lösung werden Toleranzen, die zwischen der Begrenzungsfläche und dem Kassettengehäuse auftreten können, ausgeglichen. Die elastisch nachgiebige Pufferung sichert einen klapperfreien Sitz des Kassettengehäuses in montiertem Zustand. Vorzugsweise ist ein Relativspiel etwa lotrecht zu der fahrzeugseitigen Begrenzungsfläche vorgesehen. Es ist aber auch möglich, das Relativspiel in anderen, zwei- oder dreidimensionalen Bewegungsrichtungen vorzusehen. Die elastische Pufferung ist auf das jeweilige Relativspiel abgestimmt und schafft die zugehörige Dämpfung. Die elastische Pufferung kann auch dazu beitragen, bei einer Montagebewegung nach Art einer Verkeilung oder nach Art eines Bajonettverschlusses durch entsprechende elastische Kompression der Pufferung eine Verspannung der Befestigungsvorrichtung in montiertem Zustand zu erzielen.

Die elastisch nachgiebige Pufferung ist als Elastomerschichtgebilde gestaltet, das einen Teilbereich der Außenkontur der Befestigungseinheit, insbesondere den wenigstens einen Profilabschnitt, flächig überdeckt.

In Ausgestaltung der Erfindung ist das Kassettengehäuse mit wenigstens einer Aufnahmeprofilierung versehen, die sich in Längsrichtung des Kassettengehäuses erstreckt, und in die die wenigstens eine Befestigungseinheit mittels wenigstens eines korrespondierenden Profilabschnittes einschiebbar ist. Diese Lösung ist nicht nur als Ausgestaltung der zuvor beschriebenen Erfindung, sondern auch als selbstständige Lösung der oben angegebenen Aufgabe von Vorteil. Denn durch die sich in Längsrichtung des Kassettengehäuses erstreckende Aufnahmeprofilierung ist es möglich, die Befestigungseinheit längs der Aufnahmeprofilierung an die gewünschte Stelle zu verschieben und so Toleranzen in Längsrichtung des Kassettengehäuses bei der entsprechenden Befestigung an der fahrzeugseitigen Begrenzungsfläche auszugleichen.

In weiterer Ausgestaltung der Erfindung weist die Aufnahmeprofilierung einen Ausweichraum auf, in die ein Elastomermaterial der Pufferung hinein ausweichen kann.

Diese Ausgestaltung ist von Vorteil, falls die Befestigungseinheit mit ihrem wenigstens einen Profilabschnitt in die Aufnahmeprofilierung, die aus einer oder mehreren Profilnuten bestehen kann, eingeschoben wird, um die Gleitreibung während des Einschiebvorganges zu reduzieren.

In weiterer Ausgestaltung der Erfindung sind die wenigstens eine Aufnahmeprofilierung und der wenigstens eine korrespondierende Profilabschnitt derart unsymmetrisch gestaltet, dass die Befestigungseinheit in einer einzigen vorgegebenen Ausrichtung in die Aufnahmeprofilierung einschiebbar ist. Dadurch ist gewährleistet, dass die Befestigungseinheit nicht falsch montiert werden kann.

Die Elastomerschicht weist vorzugsweise eine gleichmäßige Schichtdicke auf. Die flächige Anlage an der Außenkontur der Befestigungseinheit ermöglicht eine sichere Dämpfungsfunktion und gewährleistet gleichzeitig ein einfaches Einschieben, d.h. Montieren, oder ein Herausziehen, d.h. Demontieren der Befestigungseinheit aus der wenigstens einen Aufnahmeprofilierung.

In weiterer Ausgestaltung der Erfindung ist die Elastomerschicht so weit über Gleitflächen des Profilabschnittes hinaus an der Befestigungseinheit vorgesehen, dass ein Abschälen der Elastomerschicht während eines Einschiebvorganges in die Aufnahmeprofilierung des Kassettengehäuses verhindert wird. Dadurch wird eine Beschädigung der Elastomerschicht zuverlässig verhindert.

In weiterer Ausgestaltung der Erfindung ist eine Pufferungsschicht zwischen korrespondierenden Kontaktflächen der Befestigungseinheit am Kassettengehäuse und der fahrzeugseitigen Befestigungsprofilierung vorgesehen. Eine derartige Pufferungsschicht kann ebenfalls ein Relativspiel zwischen der fahrzeugseitigen Befestigungsprofilierung und der Befestigungseinheit am Kassettengehäuse dämpfen. Allerdings besteht die Gefahr, dass die Pufferungsschicht einem erhöhten Verschleiß ausgesetzt ist, da sie bei jedem Montage- oder Demontagevorgang des Kassettengehäuses relativ zu der fahrzeugseitigen Begrenzungsfläche belastet wird.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform einer erfindungsgemäßen Befestigungsvorrichtung für ein Kassettengehäuse an einer Rückenlehnenanordnung eines Kraftfahrzeugs,
- Fig. 2: den rückenlehnenseitigen Teil der Befestigungsvorrichtung nach Fig. 1,
- Fig. 3: den kassettenhäuseseitigen Teil der erfindungsgemäßen Befestigungsvorrichtung für einen Laderaum eines Kraftfahrzeugs,
- Fig. 4: in vergrößerter Darstellung eine Befestigungseinheit der Befestigungsvorrichtung nach Fig. 3,
- Fig. 5: die Befestigungseinheit nach Fig. 4 in teilweise aufgebrochener Darstellung,
- Fig. 6: eine weitere Ausführungsform einer Befestigungseinheit ähnlich Fig. 4 und 5 und
- Fig. 7: eine weitere Ausführungsform einer Befestigungseinheit ähnlich den Ausführungen nach den Fig. 4 bis 6.

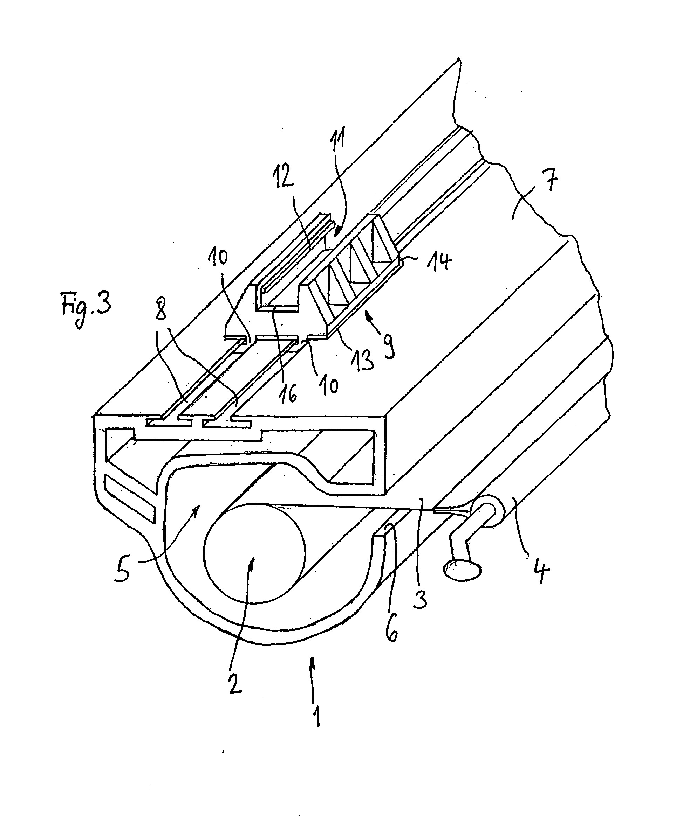

Ein Kraftfahrzeug in Form eines Kombi-Personenkraftwagens, eines Vans, eines SUVs oder ähnlichem weist einen Laderaum auf, der in einem Fahrzeuginnenraum angeordnet ist und etwa oberhalb einer Fahrzeugbrüstung offen in einen Fahrgastraum des Fahrzeuginnenraumes übergeht. Um den Laderaum etwa auf Höhe der Fahrzeugbrüstung etwa horizontal abdecken zu können, und/oder um eine etwa vertikale Abtrennung des Laderaumes von dem Fahrgastraum zu ermöglichen, können eine Laderaumabdeckung und/oder ein Trennnetz vorgesehen sein. Die Laderaumabdeckung und/oder das Trennnetz sind als flexible Flächengebilde ausgeführt, die auf jeweils einer Wickelwelle auf- und abwickelbar gehalten sind. Die jeweilige Wickelwelle ist in einem formstabilen Kassettengehäuse drehbar gelagert, das sich zumindest weitgehend über die gesamte Breite des Laderaums erstreckt und in Fahrzeugquerrichtung knapp unterhalb der Fahrzeugbrüstung hinter einer Rückenlehnenanordnung R einer Fondsitzanordnung angeordnet ist. Beim hier dargestellten Ausführungsbeispiel ist ein entsprechendes Kassettengehäuse 1 lediglich mit einer einzelnen Wickelwelle 2 versehen, die in einem Hohlraum 5 des Kassettengehäuses 1 angeordnet ist und ein flexibles Flächengebilde in Form eines Trennnetzes 3 trägt, das auf- und abwickelbar auf der Wickelwelle 2 gehalten ist (Fig. 3). Das Trennnetz 3 ist an seinem in Auszugrichtung vorderen Stirnendbereich mit einer Auszugleiste 4 versehen, die in montiertem Zustand des Kassettengehäuses 1 und in ausgezogener Funktionsposition des Trennnetzes 3 in dachseitigen Halterungen lösbar festlegbar ist.

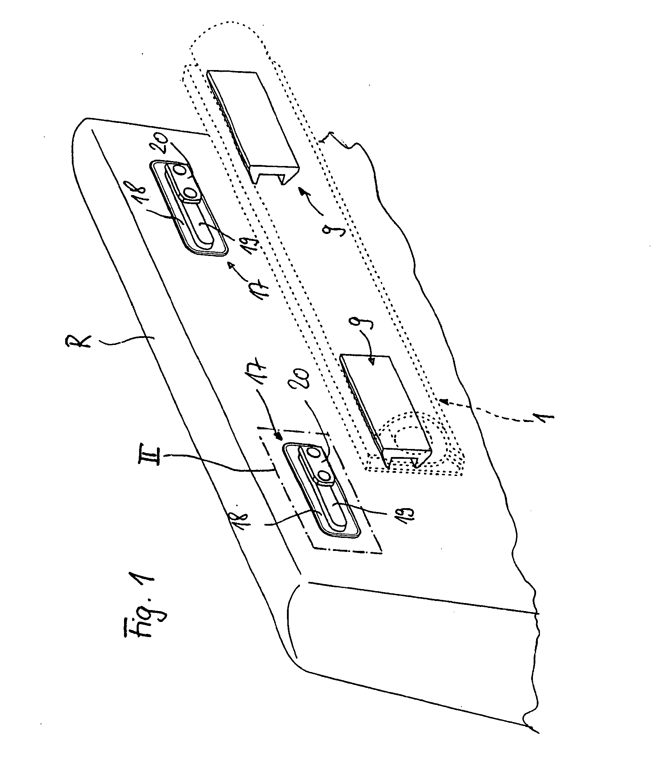

Das Kassettengehäuse 1 ist mittels einer Befestigungsvorrichtung 9, 17 an der Rückenlehnenanordnung R der Fondsitzanordnung befestigbar. Hierzu sind im Bereich einer der Rückenlehnenanordnung R zugewandten Montageseite 7 des Kassettengehäuses 1 mehrere Befestigungseinheiten 9 vorgesehen, die nachfolgend näher beschrieben sind. In Fig. 1 sind die Befestigungseinheiten 9 lediglich schematisch angedeutet. Insbesondere wurden die rückseitigen Befestigungsprofilierungen weggelassen. Vorzugsweise sind wenigstens zwei derartige Befestigungseinheiten über die Länge des Kassettengehäuses 1 verteilt an diesem angeordnet.

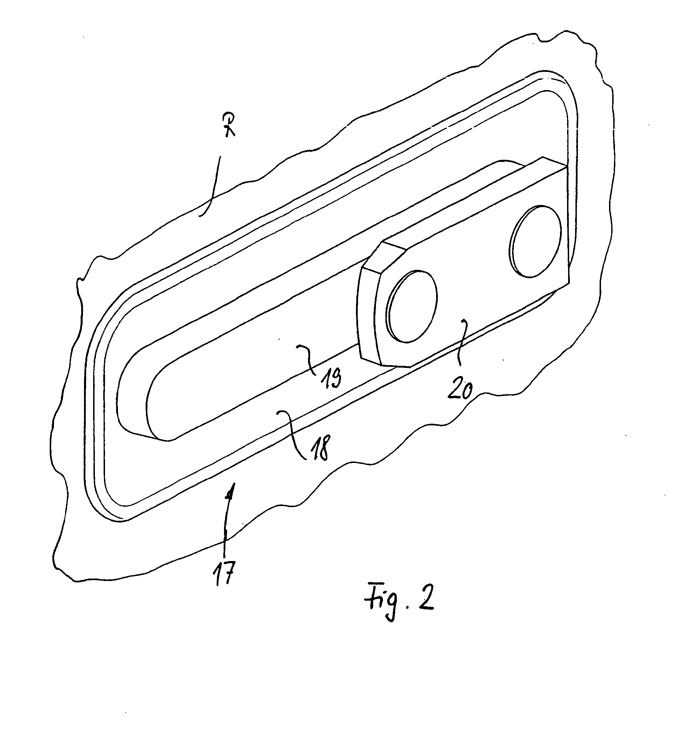

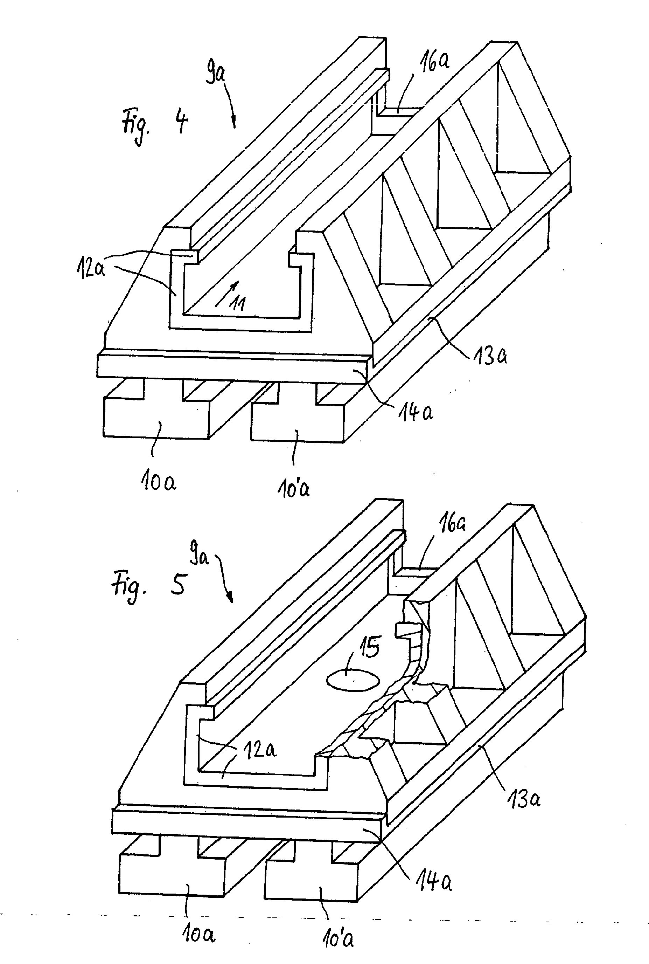

An einer eine Begrenzungsfläche im Sinne der Erfindung bildenden Rückseite der Rückenlehnenanordnung R sind korrespondierende Befestigungsprofilierungen 17 vorgesehen, die jeweils mit einer Befestigungseinheit 9 zusammenwirken können. Die Befestigungsprofilierungen 17 sind auf Höhe der gewünschten Positionierung des Kassettengehäuses an der Rückseite der Rückenlehne R der Fondsitzanordnung befestigt und weisen Befestigungsteile 18, 19, 20 auf, die derart korrespondierend zu den Befestigungseinheiten 9 ausgeführt sind, dass das Kassettengehäuse 1 durch eine einfache Steck- und/oder Spannverbindung manuell und vorzugsweise werkzeuglos formschlüssig mit der Befestigungsprofilierung verbunden werden kann. Die Befestigungsteile sind in Fig. 1 und 2 gut erkennbar. Die Befestigungseinheit 9 weist eine Aufnahme 11 auf, in die in nicht näher dargestellter Weise ein stegartiger Sicherungsbschnitt 20 der lehnenseitigen Befestigungsprofilierung eintauchen und formschlüssig in diese eingeschoben werden kann. Auf der der offenen Seite gegenüberliegenden Seite der Aufnahme 11 ist diese mit einem Anschlag 16 versehen, der ein weiteres Einschieben des korrespondierenden Teiles 20 der Befestigungsprofilierung 17 verhindert und somit eine Begrenzung für den entsprechenden Teil 20 der Befestigungsprofilierung 17 bildet. Die Befestigungsprofilierung ist zum einen mit einer Aussparung 18 und zum anderen in Fahrzeugquerrichtung hieran anschließend mit dem in die Aufnahme 11 eintauchenden, stegartigen Abschnitt 20 versehen. Für eine Montage wird die Befestigungseinheit 9 in ihrer am Kassettengehäuse 1 angebrachten Position zunächst in die Aussparung 18 durch entsprechende, lotrecht zur Rückseite der Rückenlehnenanordnung erfolgte Bewegung eingetaucht und anschließend in Fahrzeugquerrichtung bis zum Endanschlag 16 zur Seite geschoben. Geführt und zentriert wird die Befestigungseinheit 9 durch einen zentralen Stegabschnitt 19, der sich in Schubrichtung der Befestigungseinheit 9 erstreckt und mittig in der Aussparung 18 angeordnet ist. Auf den Stegabschnitt ist der Sicherungsabschnitt 20 aufgesetzt und durch Befestigungsmittel auf diesem befestigt. Der stegartige Sicherungsabschnitt 20 der Befestigungsprofilierung taucht in die Aufnahme 11 der Befestigungseinheit 9 ein. Entsprechend oben flankierende Schenkel der Befestigungseinheiten 9 im Bereich der Aufnahme 11 weisen eine Keilform auf, so dass die Befestigungseinheit 9 beim Aufschieben auf entsprechende Abschnitte der Befestigungsprofilierung festgespannt wird. Alternativ oder ergänzend können auch die Sicherungsabschnitte 20 der Befestigungsprofilierungen 17 zumindest abschnittsweise keilförmig ausgeführt sein. Der Aufnahme 11 sind zusätzliche Gleitelemente 12 zugeordnet, die das Aufschieben erleichtern und die Verspannungen der aufgeschobenen Position unterstützen. Diese Gleitelemente 12 sind als Auskleidung der Aufnahme 11 ausgeführt, wie anhand der Fig. 5 (Gleitelemente 12a) erkennbar ist. Vorzugsweise ist die Aussparung der Befestigungsprofilierung so gestaltet, dass die Befestigungseinheit 9 über ihre Höhe zumindest nahezu vollständig in diese Aussparung eintaucht, so dass das Kassettengehäuse 1 in montiertem Zustand bündig an der Rückseite der Rückenlehnenanordnung anliegt.

In der Rückseite der Rückenlehnenanordnung R sind mehrere Befestigungsprofilierungen 17 in Fahrzeugquerrichtung über die Breite der Rückenlehnenanordnung verteilt angeordnet. Vorzugsweise sind zwei Befestigungsprofilierungen 17 vorgesehen. Es ist aber auch möglich, lediglich eine einzelne Befestigungsprofilierung nach Art einer Schiene vorzusehen, die sich über vorzugsweise nahezu die gesamte Breite des Laderaums erstreckt. In dieser sind dann eine der Anzahl der Befestigungseinheiten 9 am Kassettengehäuse 1 entsprechende Anzahl von Aussparungen vorgesehen.

Um sicherzustellen, dass das Kassettengehäuse 1 an der Rückenlehnenanordnung problemlos montiert werden kann, ist die zur Rückenlehnenanordnung R gewandte Montagefläche 7 des Kassettengehäuses 1 eben gestaltet. Die entsprechende Wandung des Kassettengehäuses 1 ist über die gesamte Länge des Kassettengehäuses 1 mit zwei Aufnahmeprofilierungen 8 versehen, die nutartig offen sind und jeweils einen T-förmigen Querschnitt besitzen. Beide Aufnahmeprofilierungen 8 erstrecken sich parallel zueinander und sind zu einem Stirnende des Kassettengehäuses 1 hin offen. Die Befestigungseinheit 9 weist an ihrer Unterseite zwei Gleitschuhe 10 auf, deren Querschnitt korrespondierend zu den Querschnitten der Aufnahmeprofilierungen 8 gestaltet ist. Mittels dieser Gleitschuhe 10, die Profilabschnitte der Befestigungseinheiten 9 bilden, wird die Befestigungseinheit 9 in die Aufnahmeprofilierungen 8 eingeschoben und ist aufgrund der T-förmigen Querschnitte der Profilabschnitte 10 lotrecht zur Montagefläche 7 formschlüssig an dem Kassettengehäuse 1 gehalten. Die Befestigungseinheit 9 ist mit geringem Relativspiel zur Montagefläche 7 des Kassettengehäuses 1 und in den Aufnahmeprofilierungen 8 angeordnet, um ein Verschieben der Befestigungseinheit 9 längs der Aufnahmeprofilierungen 8 zu ermöglichen. An der der Montagefläche 7 zugewandten Unterseite der Befestigungseinheit 9 ist zudem eine Pufferungsschicht 13 aus einem elastisch nachgiebigen Kunststoffmaterial vorgesehen, die das Relativspiel zwischen der Montagefläche 7 und der Befestigungseinheit 9 ausgleicht und so eine Dämpfung der Anordnung der Befestigungseinheit 9 an dem Kassettengehäuse 1 ermöglicht. Die Pufferungsschicht 13 ist aus einem Elastomermaterial oder einem ähnlichen elastischen Kunststoffmaterial hergestellt. Die Pufferungsschicht 13 ist flächig mit der Unterseite der Befestigungseinheit 9 verbunden. Um ein Abschälen der Pufferungsschicht 13 bei einem Aufschiebevorgang auf die Montagefläche 7 des Kassettengehäuses 1 zu verhindern, ist ein in Einschubrichtung vorderer Stirnrand der Pufferungsschicht 13 über die vordere Stirnfläche der Befestigungseinheit 9 geringfügig nach oben gezogen.

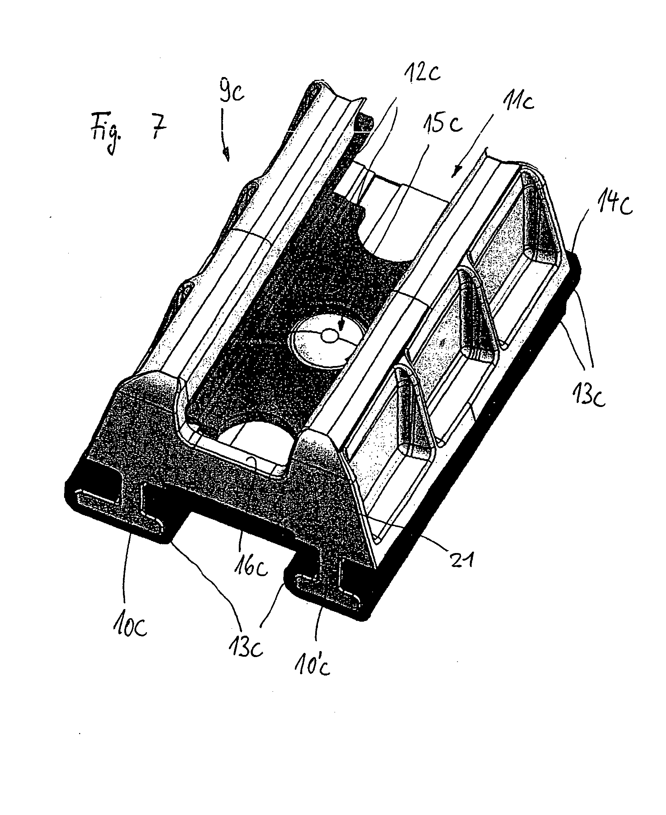

Die Befestigungseinheit 9 kann in Längsrichtung des Kassettengehäuses 1 soweit verschoben werden, bis eine fluchtende Position mit einer entsprechenden Aussparung der fahrzeugseitigen Befestigungsprofilierung erreicht ist. In dieser Position wird die Befestigungseinheit 9 an der Montagefläche 7 des Kassettengehäuses 1 durch wenigstens ein entsprechendes Befestigungselement 15, 15c (Fig. 5 und 7) fixiert. Das Befestigungselement ist insbesondere als Klemmschraube oder als Niet ausgeführt. Durch die Fixierung der Befestigungseinheit 9 in der gewünschten Position wird die Unterseite der Befestigungseinheit 9 gegen die Kontaktfläche 7 gepresst, wodurch eine geringfügige Verdrängung der Pufferungsschicht 13 erfolgt. Bei der Ausführungsform nach Fig. 7 ist hierfür ein Ausweichraum 21 im Bereich der Unterseite der Befestigungseinheit 9c vorgesehen, der als über die Länge der Befestigungseinheit 9c durchgängige Vertiefung ausgeführt ist.

Anhand der Ausführungsbeispiele gemäß den Fig. 4, 5 und 7 ist erkennbar, dass die jeweiligen Befestigungseinheiten 9a, 9c, die vom grundsätzlichen Aufbau her der Befestigungseinheit 9 nach Fig. 3 entsprechen, mit codierten Gleitschuhen 10a, 10'a, 10c, 10'c versehen sind. Die entsprechenden Profilabschnitte der Befestigungseinheit 9a, 9c weisen unterschiedliche Querschnittsprofile auf. in gleicher Weise sind auch die entsprechenden Aufnahmeprofilierungen (nicht dargestellt) an der Montagefläche des Kassettengehäuses korrespondierend unterschiedlich und damit asymmetrisch zueinander ausgeführt. Dadurch kann die Befestigungseinheit 9a, 9c lediglich in einer einzigen Ausrichtung in die Aufnahmeprofilierungen eingeschoben werden. Hierdurch ist gewährleistet, dass die offene Seite der Aufnahme 11 jeweils relativ zu der Befestigungsprofilierung an der Rückenlehnenanordnung korrekt ausgerichtet ist, um ein Aufschieben und damit ein Montieren des Kassettengehäuses an der Rückenlehnenanordnung zu ermöglichen.

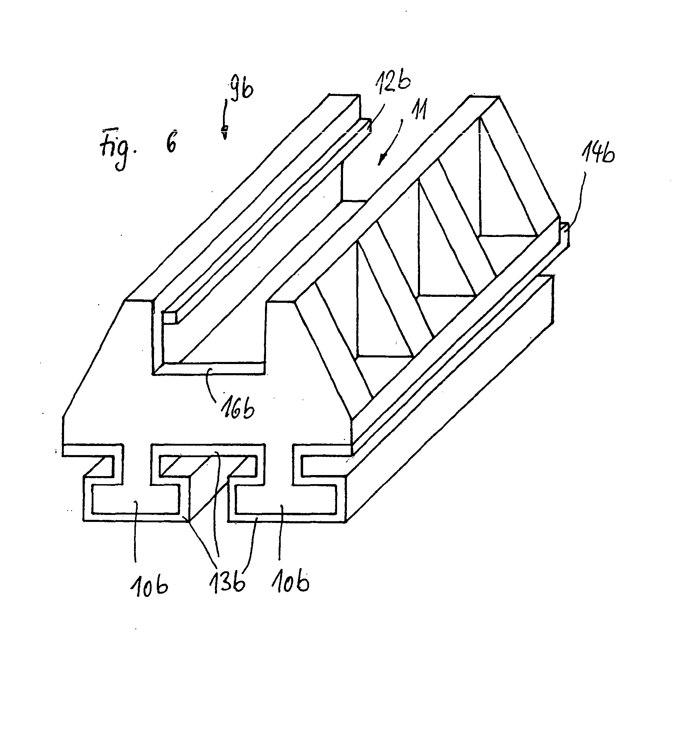

Bei der Ausführungsform nach den Fig. 6 und 7 ist die Pufferungsschicht 13b, 13c der jeweiligen Befestigungseinheit 9b und 9c nicht nur im Bereich der dem Kassettengehäuse zugewandten Unterseite vorgesehen, sondern ummantelt auch die Gleitschuhe 10b; 10c, 10'c vollständig flächig.

Im übrigen entsprechen alle Ausführungsformen von Befestigungseinheiten gemäß den Fig. 4 bis 7 der Befestigungseinheit 9, wie sie unter Zuhilfenahme der Zeichnungen nach Fig. 1 bis 3 ausführlich beschrieben worden ist. Gleiches gilt auch für die Anordnung am Kassettengehäuse. Bezüglich der näheren Erläuterungen zu den Befestigungseinheiten 9a, 9b, 9c nach den Fig. 4 bis 7 wird daher auf die Ausführungen zu der Befestigungseinheit 9 nach Fig. 3 verwiesen.

## Patentansprüche

1. Befestigungsvorrichtung an einer fahrzeugseitigen Begrenzungsfläche (R), insbesondere einer Rückenlehnen-anordnung einer Fahrzeugsitzanordnung, mit einem kasettense house (1) und wenigstens einer fahrzeugseitigen Befestigungsprofilierung (17), die formschlüssig mit einer auf die Befestigungsprofilierung (17) abgestimmten Befestigungseinheit (9, 9a, 9b, 9c) an dem Kassettengehäuse (1) zusammenwirkt, wobei zwischen der Begrenzungsfläche (R) und dem Kassettengehäuse (1) in montiertem Zustand des Kassettengehäuses ein begrenztes Relativspiel vorgesehen ist, und wobei der Befestigungseinheit (9, 9a, 9b, 9c) eine elastisch nachgiebige Pufferung (13, 13a, 13b, 13c) zugeordnet ist, die das Relativspiel dämpft, **dadurch gekennzeichnet, dass** die elastisch nachgiebige Pufferung (13, 13a, 13b, 13c) als Elastomerschichtgebilde gestaltet ist, das einen Teilbereich der Außenkontur der Befestigungseinheit (9, 9a, 9b, 9c) flächig überdeckt.

2. Befestigungsvorrichtung nach Anspruch 1, **dadurch gekennzeichnet, dass** das Kassettengehäuse (1) mit wenigstens einer Aufnahmeprofilierung (8) versehen ist, die sich in Längsrichtung des Kassettengehäuses (1) erstreckt, und in die die wenigstens eine Befestigungseinheit (9, 9a, 9b, 9c) mittels wenigstens eines korrespondierenden Profilabschnittes (10, 10a, 10'a, 10b, 10c, 10'c) einschiebbar ist.

3. Befestigungsvorrichtung nach Anspruch 2, **dadurch gekennzeichnet, dass** der Aufnahmeprofilierung oder der Befestigungseinheit (9c) ein Ausweichraum (21) zugeordnet ist, in den Teilbereiche der Pufferung (13c) hinein ausweichen können.

4. Befestigungsvorrichtung nach Anspruch 1, **dadurch gekennzeichnet, dass** das Elastomerschichtgebilde (13, 13a, 13b, 13c) über eine -in Einschubrichtung der Befestigungseinheit (9, 9a, 9b, 9c) in die Aufnahmeprofilierung (8) gesehen- vordere Stirnfläche der Gleitflächen der Befestigungseinheit (9, 9a, 9b, 9c) hinaus erstreckt ist.

5. Befestigungsvorrichtung nach Anspruch 1, **dadurch gekennzeichnet, dass** eine Pufferungsschicht (12, 12a, 12b, 12c) zwischen korrespondierenden Kontaktflächen der Befestigungseinheit (9, 9a, 9b, 9c) am Kassettengehäuse (1) und der fahrzeugseitigen Befestigungsprofilierung vorgesehen ist.

## Claims

1. Fastening device on a vehicle-side limiting surface (R), in particular of a backrest arrangement of a vehicle seat arrangement, with a cassette housing (1) and at least one vehicle-side fastening profile (17) positively interacting with a fastening unit (9, 9a, 9b, 9c) on the cassette housing (1) and matched to the fastening profile (17), where a limited relative play is provided between the limiting surface (R) and the cassette housing (1) in the assembled state of the cassette housing, and where an elastically yielding buffer (13, 13a, 13b, 13c) is assigned to the fastening unit (9, 9a, 9b, 9c) and cushions the relative play, **characterized in that** the elastically yielding buffer (13, 13a, 13b, 13c) is designed as an elastomer layer structure which covers in surface contact part of the outer contour of the fastening unit (9, 9a, 9b, 9c).

2. Fastening device according to Claim 1, **characterized in that** the cassette housing (1) is provided with at least one receiving profile (8) extending in the longitudinal direction of the cassette housing (1) and into which the at least one fastening unit (9, 9a, 9b, 9c) can be inserted by means of at least one corresponding profile section (10, 10a, 10'a 10b, 10c, 10'c).

3. Fastening device according to Claim 2, **characterized in that** the receiving profile or the fastening unit (9c) is assigned an expansion space (21) into which parts of the buffer (13c) can expand.

4. Fastening device according to Claim 1, **characterized in that** the elastomer layer structure (13, 13a, 13b, 13c) is extended beyond an end face of the sliding surfaces of the fastening unit (9, 9a, 9b, 9c) that is at the front when viewed in the insertion direction of the fastening unit (9, 9a, 9b, 9c) into the receiving profile (8).

5. Fastening device according to Claim 1, **characterized in that** a buffer layer (12, 12a, 12b, 12c) is provided between corresponding contact surfaces of the fastening unit (9, 9a, 9b, 9c) on the cassette housing (1) and the vehicle-side fastening profile.

## Revendications

1. Dispositif de fixation sur une face de délimitation (R) solidaire d'un véhicule, en particulier un dossier d'un siège de véhicule, comprenant un boîtier de cassette (1) et au moins un profilé de fixation (17) solidaire du véhicule, qui agit conjointement par complémentarité de forme avec une unité de fixation (9, 9a, 9b, 9c) située sur le boîtier de cassette (1) et adaptée au profilé de fixation (17), sachant qu'à l'état monté du boîtier de cassette est prévu un jeu relatif limité entre la face de délimitation (R) et le boîtier de cassette (1), et qu'à l'unité de fixation (9, 9a, 9b, 9c) est associé un élément tampon (13, 13a, 13b, 13c) déformable par élasticité qui atténue le jeu relatif, **caractérisé en ce que** l'élément tampon (13, 13a, 13b, 13c) déformable par élasticité est conçu en tant que structure lamellaire d'élastomère qui recouvre en nappe une zone partielle du contour extérieur de l'unité de fixation (9, 9a, 9b, 9c).

2. Dispositif de fixation selon la revendication 1, **caractérisé en ce que** le boîtier de cassette (1) est muni d'au moins un profilé de logement (8) qui s'étend dans le sens longitudinal du boîtier de cassette (1), et dans lequel l'au moins une unité de fixation (9, 9a, 9b, 9c) peut être introduite au moyen d'au moins une section de profilé correspondante (10, 10a, 10'a, 10b, 10c, 10'c).

3. Dispositif de fixation selon la revendication 2, **caractérisé en ce qu'**au profilé de logement ou à l'unité de fixation (9c) est associé un espace d'évitement (21) dans lequel des parties de l'élément tampon (13c) peuvent s'engager.

4. Dispositif de fixation selon la revendication 1, **caractérisé en ce que** la structure lamellaire d'élastomère (13, 13a, 13b, 13c) - vue dans sens d'introduction de l'unité de fixation (9, 9a, 9b, 9c) dans le profilé de logement (8) - s'étend au-delà d'une face antérieure des surfaces de glissement de l'unité de fixation (9, 9a, 9b, 9c).

5. Dispositif de fixation selon la revendication 1, **caractérisé en ce qu'**est prévue une couche tampon (12, 12a, 12b, 12c) entre des surfaces de contact correspondantes de l'unité de fixation (9, 9a, 9b, 9c) sur le boîtier de cassette (1) et du profilé de fixation solidaire du véhicule.
